# EUROPÄISCHE PATENTSCHRIFT

(11) **EP 4 150 007 B1**
(45) Veröffentlichungstag und Bekanntmachung des Hinweises auf die Patenterteilung: **08.11.2023**
(21) Anmeldenummer: 20725516.7
(22) Anmeldetag: 11.05.2020
(51) Int. Cl.: C08L 83/14

(54) **FARBMITTEL ENTHALTENDE ZUSAMMENSETZUNGEN, VERFAHREN ZU DEREN HERSTELLUNG UND DEREN VERWENDUNG**
COMPOSITIONS CONTAINING COLORANTS, PROCESS FOR PREPARING SAID COMPOSITIONS AND THEIR USE
COMPOSITIONS CONTENANT DES COLORANTS, PROCÉDÉ DE PRÉPARATION DESDITES COMPOSITIONS ET LEUR UTILISATION

(43) Veröffentlichungstag der Anmeldung: 22.03.2023
(73) Patentinhaber: Wacker Chemie AG, 81737 München (DE)
(72) Erfinder: SCHÄFER, Oliver, 84489 Burghausen (DE); JOACHIMBAUER, Michael, 84367 Gumpersdorf (DE)
(74) Vertreter: Mieskes, Klaus Theoderich
(86) Internationale Anmeldenummer: PCT/EP2020/063059
(87) Internationale Veröffentlichungsnummer: WO 2021/228361

(56) Entgegenhaltungen:
- WO-A2-2007/073502
- US-A1- 2007 148 474
- US-A1- 2007 148 475

## Beschreibung

Die vorliegende Erfindung betrifft Farbmittel enthaltende Zusammensetzungen, Verfahren zu deren Herstellung und deren Verwendung bei der Einfärbung von Polymerwerkstoffen.

Sogenannte Farb-Masterbatches werden derzeit typischerweise aus Kunststoffgranulaten und Farbmitteln hergestellt und sind für die individuelle Farbgebung von Kunststoffartikeln unverzichtbar. Das erforderliche Colorieren erfolgt in der Regel durch Misch- und Schmelzprozess von Farbmittel und Kunststoffgranulat unter Beimischung geringer Mengen von Additiven im Extruder.

Die Homogenität des Farbtons im finalen Kunststoffartikel hängt davon ab, welches Fließverhalten in der Schmelze erreicht wird bzw. wie gut sich der Masterbatch in der Matrix verteilt. Für jede Kunststoffklasse gibt es daher spezielle Masterbatchtypen. Eine prinzipielle Problematik der Masterbatchherstellung ist, dass Pigmente, deren Primärpartikel im Größenbereich von wenigen Nanometern bis einigen Mikrometern liegen, in die makromolekularen Werkstoffe im Schmelzemischverfahren eingearbeitet werden müssen. Das Aufschließen der Pigmentagglomerate und das homogene Verteilen der Pigmente in der z.T. sehr hochviskosen Kunststoffschmelze können aber durchaus problematisch sein. Zudem muss ein bereits aufgeschmolzener und granulierter Polymerwerkstoff bei diesem Schmelzecompoundieren erneut aufgeschmolzen und granuliert werden, dies abhängig vom Verfahren sogar mehrmals. Neben einem hohen energetischen Aufwand, der damit verbunden ist, kann die wiederholte thermische Belastung in Folge von Kettenabbaureaktionen auch zu einer Schädigung des Masterbatch-Trägermaterials führen, mit daraus resultierendem Molmassenabbau.

Das Mischverhalten von Farbmitteln in den jeweiligen Kunststoffen ist - vor allem bei höheren Konzentrationen an Pigmenten bzw. Farbstoffen - nicht vorhersehbar, so dass vor allem die Herstellung von Masterbatches oftmals Schwierigkeiten bereitet, da die in einen jeweiligen Kunststoff einzuarbeitenden Farbmittel, also z.B. Pigmente oder Farbstoffe, oftmals agglomerieren, so dass starke Inhomogenitäten auftreten. Dies führt zu nachteiligen Eigenschaften des Masterbatches, z.B. was rheologische oder mechanische Eigenschaften anbelangt.

EP-A 2113522 offenbart einen Masterbatch enthaltend ein Polysiloxan-Polyharnstoff-Copolymer, einen besonders interessanten Kunststoff, der durch seine vorteilhaften Materialeigenschaften ein breites Anwendungsgebiet abdeckt und in vielen thermoplastischen Polymeren leicht in feiner Verteilung einzuarbeiten ist. Darüber hinaus ist es relativ einfach, in die zur Herstellung dieses Silicon-Copolymeren verwendeten Edukte in hoher Konzentration Farbpigmente feinverteilt einzuarbeiten. Nachteilig bei der Verwendung von Farbmasterbatchen nach EP-A 2113522 während der thermoplastischen Verarbeitung von Polymeren ist die Tatsache, dass das in EP-A 2113522 verwendete Silicon-Copolymer bei höheren Verarbeitungstemperaturen ab etwa 220 °C zu Kettenabbau neigt, so dass es bei einigen thermoplastischen Kunststoffen mit höherer Verarbeitungstemperatur keine Verwendung finden kann, da bedingt durch den thermischen Abbau keine homogene Abgabe der Pigmente an die thermoplastische Matrix mehr gewährleistet ist.

Die Dokumente US 2007/148474 , WO 2007/073502, US 2007/148475 offenbaren Zusammensetzungen enthaltend Polysiloxan/Polyoxamid Copolymere, die der vorliegenden Komponente (E) entsprechen, und möglicherweise ein Farbmittel.

Gegenstand der Erfindung ist ein Verfahren zur Herstellung von Farbmittel enthaltenden Zusammensetzungen, bei dem
in einem 1. Schritt mindestens ein Siloxan (A) der allgemeinen Formel (I) 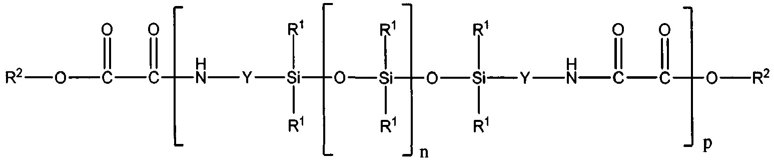 wobei
R¹ gleich oder verschieden sein kann und einen einwertigen, SiC-gebundenen, gegebenenfalls substituierten Kohlenwasserstoffrest bedeutet, der durch Heteroatome unterbrochen sein kann,
R² gleich oder verschieden sein kann und Wasserstoffatom oder einen einwertigen, gegebenenfalls substituierten Kohlenwasserstoffrest darstellt, der durch Heteroatome unterbrochen sein kann,
Y gleich oder verschieden sein kann und bivalente, gegebenenfalls substituierte Kohlenwasserstoffreste mit 1 bis 40 Kohlenstoffatomen bedeutet, wobei einzelne Kohlenstoffatome durch Sauerstoffatome oder -NR- ersetzt sein können,
R gleich Wasserstoffatom oder einen einwertigen, gegebenenfalls substituierten Kohlenwasserstoffrest bedeutet,
n gleich 0 oder eine Zahl von 1 bis 1000 ist und
p gleich 0 oder eine Zahl von 1 bis 10 ist,
mindestens eine Verbindung (B) der allgemeinen Formel

   R⁴NH-R³-NR⁴H (II),

   wobei
R³ einen bivalenten, gegebenenfalls substituierten Kohlenwasserstoffrest mit 1 bis 40 Kohlenstoffatomen bedeutet, wobei einzelne Kohlenstoffatome durch Sauerstoffatome oder -NR'- ersetzt sein können,
R' gleich Wasserstoffatom oder einen einwertigen, gegebenenfalls substituierten Kohlenwasserstoffrest bedeutet und
R⁴ gleich oder verschieden sein kann und Wasserstoffatom oder einen einwertigen, gegebenenfalls substituierten Kohlenwasserstoffrest darstellt, der durch Heteroatome unterbrochen sein kann,
(D) mindestens ein Farbmittel,
gegebenenfalls Verbindung (C) der allgemeinen Formel

   R⁵NH-Y¹-SiR⁶₂-[O-SiR⁶₂]ₘ-O-SiR⁶₂-Y¹-NHR⁵ (III),

   wobei
R⁶ gleich oder verschieden sein kann und einen einwertigen, SiC-gebundenen, gegebenenfalls substituierten Kohlenwasserstoffrest bedeutet, der durch Heteroatome unterbrochen sein kann,
R⁵ gleich oder verschieden sein kann und Wasserstoffatom oder einen einwertigen, gegebenenfalls substituierten Kohlenwasserstoffrest darstellt, der durch Heteroatome unterbrochen sein kann,
Y¹ gleich oder verschieden sein kann und bivalente, gegebenenfalls substituierte Kohlenwasserstoffreste mit 1 bis 40 Kohlenstoffatomen bedeutet, wobei einzelne Kohlenstoffatome durch Sauerstoffatome oder -NR"- ersetzt sein können,
R" gleich Wasserstoffatom oder einen einwertigen, gegebenenfalls substituierten Kohlenwasserstoffrest bedeutet, und m gleich 0 oder eine Zahl von 1 bis 1000 ist,
   und
gegebenenfalls Additive (F)
miteinander vermischt und reagieren gelassen werden, sowie gegebenenfalls in einem 2. Schritt die im 1. Schritt erhaltene Zusammensetzung aufgeschmolzen und anschließend granuliert wird.

Ein weiterer Gegenstand der Erfindung gemäss Anspruch 1 sind Farbmittel enthaltende Zusammensetzungen enthaltend
(D) mindestens ein Farbmittel,
(E) mindestens ein Siloxan-Polyoxamid-Copolymer enthaltend Einheiten der allgemeinen Formel (IV) 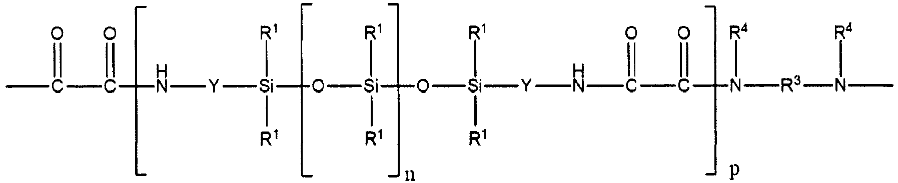 wobei R¹, R³, R⁴, Y, n und p die jeweils oben dafür angegebene Bedeutung haben, sowie
gegebenenfalls (F) Additive.

Vorzugsweise ist n eine Zahl zwischen 20 und 400, besonders bevorzugt eine Zahl zwischen 30 und 250 und ganz besonders bevorzugt eine Zahl zwischen 50 und 200.

Vorzugsweise ist m eine Zahl zwischen 20 und 400, besonders bevorzugt eine Zahl zwischen 30 und 250 und ganz besonders bevorzugt eine Zahl zwischen 50 und 200.

Vorzugsweise ist p eine Zahl von 1 bis 3, besonders bevorzugt 1 oder 2, insbesondere 1.

Beispiele für Kohlenwasserstoffreste R¹ sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neoPentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der α- und der β-Phenylethylrest.

Vorzugsweise handelt es sich bei Rest R¹ um aliphatische Kohlenwasserstoffreste, besonders bevorzugt um den Methyl- oder Ethylrest, insbesondere um den Methylrest.

Beispiele für Rest R² sind die für Rest R¹ angegebenen Reste.

Vorzugsweise handelt es sich bei Rest R² um aliphatische Kohlenwasserstoffreste, besonders bevorzugt um den Methyl- oder Ethylrest, insbesondere um den Ethylrest.

Beispiele für Rest R³ sind Methylen-, Ethylen-, Propylen- oder Hexylen-Reste.

Vorzugsweise handelt es sich bei Rest R³ um zweiwertige aliphatische Kohlenwasserstoffreste, besonders bevorzugt um den Ethylen- oder Hexylenrest, insbesondere um den Ethylenrest.

Beispiele für Rest R⁴ sind die für Rest R¹ angegebenen Reste oder Wasserstoffatom.

Vorzugsweise handelt es sich bei Rest R⁴ um Wasserstoffatom oder aliphatische Kohlenwasserstoffreste, besonders bevorzugt um Wasserstoffatom oder den Methylrest, insbesondere um Wasserstoffatom.

Beispiele für Rest R⁵ sind die für Rest R¹ angegebenen Reste.

Vorzugsweise handelt es sich bei Rest R⁵ um Wasserstoffatom oder aliphatische Kohlenwasserstoffreste, besonders bevorzugt um R⁵ Wasserstoffatom oder den Methylrest, insbesondere um Wasserstoffatom.

Beispiele für Rest R⁶ sind die für Rest R¹ angegebenen Reste.

Vorzugsweise handelt es sich bei Rest R⁶ um aliphatische Kohlenwasserstoffreste, besonders bevorzugt um den Methyl- oder Ethylrest, insbesondere um den Methylrest.

Beispiele für Rest R sind die für Rest R¹ angegebenen Reste oder Wasserstoffatom.

Vorzugsweise handelt es sich bei Rest R, R' und R" jeweils unabhängig voneinander um Methylrest oder Wasserstoffatom, besonders bevorzugt um Wasserstoffatom.

Beispiele für Rest Y und Y¹ sind unabhängig voneinander Methylen-, Ethylen-, Propylen- und Hexylenreste.

Vorzugsweise handelt es sich bei den Resten Y und Y¹ unabhängig voneinander um zweiwertige aliphatische Kohlenwasserstoffreste, besonders bevorzugt um den Methylen- oder Propylenrest, insbesondere um den Propylenrest.

Bei Komponente (A) handelt es sich bevorzugt um bei 20°C und 1013 hPa farblose Flüssigkeiten.

Die erfindungsgemäß eingesetzte Komponente (A) hat eine Viskosität von bevorzugt zwischen 10 mPas und 30 000 mPas, besonders bevorzugt zwischen 30 mPas und 2000 mPas, jeweils bei 25°C.

Beispiele für die im erfindungsgemäßen Verfahren eingesetzten Siloxane (A) sind solche der Formel (I) mit
R¹ = Methyl, R² = H₃C-CH₂-, Y = -(CH₂)₃-, p = 1; n = 140,
R¹ = Methyl, R² = H₃C-, Y = -(CH₂)₃-, p = 1; n = 140,
R¹ = Methyl, R² = H₃C-, Y = -(CH₂)₃-, p = 1; n = 50,
R¹ = Methyl, R² = H₃C-CH₂-, Y = -(CH₂)₃-, p = 1; n = 50,
R¹ = Methyl, R² = H₃C-CH₂-, Y = -(CH₂)₃-, p = 1; n = 140 und
R¹ = Methyl, R² = H₃C-CH₂-, Y = -(CH₂)₃-, p = 1; n = 250,
wobei solche der Formel (I) mit
R¹ = Methyl, R² = H₃C-CH₂-, Y = -(CH₂)₃-, p = 1; n = 140,
R¹ = Methyl, R² = H₃C-, Y = -(CH₂)₃-, p = 1; n = 140 oder
R¹ = Methyl, R² = H₃C-CH₂-, Y = -(CH₂)₃-, p = 2; n = 140 bevorzugt sind und solche der Formel (I) mit
R¹ = Methyl, R² = H₃C-CH₂-, Y = -(CH₂)₃-, p = 1; n = 140 besonders bevorzugt ist.

Komponente (A) sind handelsübliche Produkte bzw. Produkte, die nach in der Siliziumchemie gängigen Verfahren hergestellt werden können.

Bevorzugt handelt es sich bei den im erfindungsgemäßen Verfahren eingesetzten Verbindungen (B) um NH₂-(CH₂)₂-NH₂, NH₂-(CH₂)₆-NH₂, H₂N-[(CHCH₃-CH₂-O)₆(C₂H₄-0)₁₂]-(CH₂-CHCH₃)-NH₂, H₂N-[(CHCH₃-CH₂-O)₆(C₂H₄-0)₃₉]-(CH₂-CHCH₃)-NH₂ oder H₂N-[(CHCH₃-CH₂-O)₄(C₂H₄-0)₉]-(CH₂-CHCH₃)-NH₂, wobei NH₂-(CH₂)₂-NH₂ bevorzugt ist.

Komponente (B) sind handelsübliche Produkte bzw. Produkte, die nach in der Chemie gängigen Verfahren hergestellt werden können.

Im erfindungsgemäßen Verfahren wird Komponente (B) bevorzugt in Mengen von 0,2 bis 40 Gewichtsteilen, besonders bevorzugt von 0,4 bis 4 Gewichtsteilen, jeweils bezogen auf 100 Gewichtsteile der Komponente (A), eingesetzt.

Bei Komponente (C) handelt es sich bevorzugt um bei 20°C und 1013 hPa farblose Flüssigkeiten.

Die erfindungsgemäß gegebenenfalls eingesetzte Komponente (C) hat eine Viskosität bevorzugt zwischen 10 mPas und 30 000 mPas, besonders bevorzugt zwischen 30 mPas und 2000 mPas, jeweils bei 25°C.

Beispiele für gegebenenfalls eingesetzte Komponente (C) sind NH₂-(CH₂)₃-SiMe₂-[O-SiMe₂]₂-O-SiMe₂-(CH₂)₃-NH₂, NH₂-(CH₂)₃-SiMe₂-[O-SiMe₂]₅₀-O-SiMe₂-(CH₂)₃-NH₂, NH₂-(CH₂)₃-SiMe₂-[O-SiMe₂]₁₄₀-O-SiMe₂-(CH₂)₃-NH₂, NH₂-(CH₂)₃-SiMe₂-[O-SiMe₂]₂₅₀-O-SiMe₂-(CH₂)₃-NH₂ und NH₂-(CH₂)-SiMe₂-[O-SiMe₂]₅₀-O-SiMe₂-(CH₂)-NH₂, wobei NH₂-(CH₂)₃-SiMe₂-[O-SiMe₂]₅₀-O-SiMe₂-(CH₂)₃-NH₂ oder NH₂-(CH₂)₃-SiMe₂-[O-SiMe₂]₁₄₀-O-SiMe₂-(CH₂)₃-NH₂ bevorzugt sind und NH₂-(CH₂)₃-SiMe₂-[O-SiMe₂]₁₄₀-O-SiMe₂-(CH₂)₃-NH₂ besonders bevorzugt ist, wobei Me für den Methylrest steht.

Falls im erfindungsgemäßen Verfahren Komponente (C) eingesetzt wird, was nicht bevorzugt wird, handelt es sich um Mengen von bevorzugt 1 bis 50 Gewichtsteilen, besonders bevorzugt von 2 bis 20 Gewichtsteilen, jeweils bezogen auf 100 Gewichtsteile der Komponente (A).

Komponente (C) sind handelsübliche Produkte bzw. Produkte, die nach in der Siliziumchemie gängigen Verfahren hergestellt werden können.

Bei den erfindungsgemäß eingesetzten Farbmitteln (D) kann es sich um alle bisher bekannten Farbmittel handeln.

Unter Farbmittel sollen alle Substanzen mit optischer Wirkung verstanden werden. Beispiele für Farbmittel (D) sind die in DIN ISO 18451 genannten Beispiele.

Bevorzugt handelt es sich bei den Farbmitteln (D) um anorganische oder organische Farbmittel oder deren Vorstufen, besonders bevorzugt um solche ausgewählt aus anorganischen Farbstoffen, organischen Farbstoffen, anorganischen Pigmenten und organischen Pigmenten sowie deren Vorstufen oder deren Mischungen.

Beispiele für anorganische Pigmente sind solche der Gruppe der Oxide, z.B. Eisenoxid (braun, rot, schwarz), Chromoxid (grün), Titandioxid oder Kohlenstoff, z.B. Ruß-schwarz, oder Chromate, z.B. Bleichromat-gelb, Molybdatorange, oder Komplexe anorganischer Buntpigmente, z.B. Chromtitangelb, Chromeisenbraun, Kobaltblau, Nickeltitangelb, Zinkeisenbraun, Wismutvanadatgelb, oder Sulfide, z.B. Cadmiumsulfid (gelb, orange, rot), Cersulfid (gelb, orange, rot), Ultramarin (violett, blau) und Zinksulfid (weiß).

Zu den organischen Pigmenten zählen Azopigmente, z.B. verlackte Azopigmente (gelb, rot), Disazopigmente (gelb, orange, rot), Disazokondensationspigmente (gelb, rot), Benzimidazolpigmente (gelb, orange), Metallkomplexpigmente (gelb), Insoindolinpigmente (gelb), Insoindolinonpigmente (gelb), oder auch polyzyklische Pigmente, z.B. Chinacridon (violett, blau), Chinophthalon (gelb), Diketo-Pyrrolo-Pyrrol (orange, rot, violett), Dioxazinpigmente (violett), Indanthron (blau), Perylen (rot, violett) und Phthalocyanin (blau, grün).

Beispiele für Farbstoffe sind Anthrachinon-Farbstoffe, Dioxazinfarbstoffe, indigoide Farbstoffe, Formazanfarbstoffe, Methinfarbstoffe, Nitro- und Nitrosofarbstoffe, Schwefelfarbstoffe sowie Metallkomplexfarbstoffe.

Besonders bevorzugt handelt es sich bei den Farbmitteln (D) um anorganische oder organische Pigmente, insbesondere um anorganische Pigmente.

Im erfindungsgemäßen Verfahren werden Farbmittel (D) bevorzugt in Mengen von 2 bis 400 Gewichtsteilen, besonders bevorzugt in Mengen von 20 bis 300 Gewichtsteilen, insbesondere in Mengen von 25 bis 200 Gewichtsteilen, jeweils bezogen auf 100 Gewichtsteile der Komponenten (A), eingesetzt.

Falls erwünscht, können weiterhin Additive (F) eingesetzt werden, wie z.B. ausgewählt aus Nanofüllstoffen, Stabilisatoren, Antistatika, Flammschutzmitteln, Haftvermittlern, Nukleierungsmitteln, Treibmitteln und antibakteriellen Mitteln.

Falls Additive (F) eingesetzt werden, handelt es sich um Mengen von bevorzugt 0,1 bis 50 Gewichtsteile, besonders bevorzugt um 0,5 bis 30 Gewichtsteile, jeweils bezogen auf 100 Gewichtsteile der Komponente (A). Die erfindungsgemäßen Zusammensetzungen enthalten bevorzugt keine Additive (F).

Bei den einzelnen Bestandteilen des erfindungsgemäßen Verfahrens kann es sich jeweils um eine Art eines solchen Bestandteils wie auch um ein Gemisch aus mindestens zwei verschiedenen Arten derartiger Bestandteile handeln.

Beim erfindungsgemäßen Verfahren werden über die Komponenten (A), (B), (C), (D) und (F) hinaus bevorzugt keine weiteren Bestandteile eingesetzt.

Da manche der eingesetzten Edukte feuchtigkeits- bzw. luftempfindlich sein können, ist es vorteilhaft, wenn der 1. Schritt des Verfahrens unter Ausschluss von Feuchtigkeit und unter Schutzgas, bevorzugt Stickstoff oder Argon, durchgeführt wird.

Im 1. Schritt des erfindungsgemäßen Verfahrens erfolgt die Einmischung der Farbmittel (D) bevorzugt in eine oder mehrere der Komponenten (A), (B) oder (C), besonders bevorzugt in die Komponente (A). Die homogene Dispergierung von großen Konzentrationen an Farbmitteln (D) in diese relativ niedrigviskosen Systeme ist vorteilhafterweise gut handhabbar und mittels der in der Farben- und Lack-Industrie etablierten Techniken problemlos realisierbar.

Im 1. Schritt des erfindungsgemäßen Verfahrens wird bevorzugt eine fest-flüssig-Dispergierung der Farbmittel (D) in die Komponenten (A), (B) und/oder (C) vorgenommen, wobei z.B. durch Mahlen der Pigmente (D) ein optimaler Aufschluss erfolgt.

Auf Basis der flüssigen Vorstufen ist es daher auch einfach möglich, Pasten mit den Grundfarbtönen zu erzeugen. Diese Pasten können bevorzugt vor der abschließenden Polymersynthese im 1. Schritt zum Endfarbton gemischt werden. Durch anschließendes Ausreagieren der Komponenten zur fertigen Farbmittel enthaltenden Zusammensetzung erhält man das Zielprodukt in der gewünschten Farbtönung in nur einem weiteren Verarbeitungsschritt. So wird vorzugsweise das Trägermaterial des Farb-Masterbatches nur ein einziges Mal vor deren Endeinsatz thermisch belastet. Dadurch verringert sich der Einfluss möglicher thermischer Abbaureaktionen auf die Matrix.

Der 1. Schritt des erfindungsgemäßen Verfahrens erfolgt bevorzugt bei Temperaturen von mindestens 0°C, besonders bevorzugt bei 20 bis 250°C. Grundsätzlich kann aber auch bei niedrigen oder höheren Temperaturen gearbeitet werden.

Der erfindungsgemäße 1. Schritt wird bevorzugt beim Druck der umgebenden Atmosphäre, also 900 bis 1100 hPa, durchgeführt. Grundsätzlich kann aber auch bei niedrigen oder höheren Drücken gearbeitet werden.

Die im 1. Schritt erhaltenen Zusammensetzungen sind bei 20°C und 1013 hPa bevorzugt fest.

Falls erwünscht, können die im 1. Schritt erhaltenen Zusammensetzung in einem 2. Schritt aufgeschmolzen und anschließend granuliert werden, was kontinuierlich, halbkontinuierlich oder diskontinuierlich erfolgen kann.

Das Aufschmelzen im 2. Schritt wird bevorzugt bei Temperaturen von 50 bis 250°C, besonders bevorzugt von 100 bis 200°C durchgeführt, jeweils bei Drücken von bevorzugt 100 bis 30 000 hPa, besonders bevorzugt von 1000 bis 15 000 hPa, durchgeführt.

Das Granulieren im 2. Schritt kann in allen bisher bekannten Anlagen stattfinden, wie bevorzugt in Stranggranulationsanlagen oder Unterwassergranulationsanlagen.

Das Granulieren 2. Schritt wird bevorzugt bei Temperaturen von 5 bis 250°C, besonders bevorzugt bei 10 bis 150°C durchgeführt, jeweils bei Drücken von bevorzugt 900 bis 1100 hPa.

Nach Abschluss des erfindungsgemäßen 2. Schrittes werden Granulate beliebiger Form erhalten. Bevorzugt haben die erfindungsgemäß erhaltenen Granulate eine Kugel- oder Zylinderform mit vorzugsweise 1 mm bis 10 mm Seitenlängen bzw. Durchmesser.

Bei den Polysiloxan-Polyoxamid-Copolymeren (E) der erfindungsgemäßen Zusammensetzungen, die bevorzugt durch Polykondensationsreaktion aus den Komponenten (A), (B) und gegebenenfalls (C) unter Abspaltung von niedermolekularen Komponenten wie z.B. Alkoholen entstehen, handelt es sich bevorzugt um alternierende Blockcopolymere vom Typ (AB)n (bestehend aus mindestens zwei Blocksequenzen) oder vom Typ ABA (bestehend aus drei Blöcken). Falls zur Herstellung der Copolymere (E) Komponente (C) verwendet wird, kann gegebenenfalls die Dispergierbarkeit von bestimmten Farbstoffen bzw. Pigmenten durch ein verändertes Benetzungsverhalten optimiert werden.

Die Siloxanstruktur der Komponente (A) ist im Copolymer (E) stark unpolar. Die organische Komponente (B) dagegen bringt in das Copolymer (E) polare Gruppen ein. Durch die Variation von unpolaren und polaren Einheiten können die Polysiloxan-Copolymere (E) an verschiedenste Polymerwerkstoffe bezüglich der Verträglichkeit angepasst werden. Die Folge ist, dass aus einem bzw. nur wenigen Basiswerkstoffen Farb-Masterbatches für nahezu alle Polymerwerkstoffe erzeugt werden können. Man kann auf Basis dieser Polysiloxan-Copolymeren (E) also Universal-Masterbatches für nahezu alle Polymerwerkstoffe, zumindest jedoch jeweils große Polymerwerkstoffgruppen wie Polyolefine, Polyester, Polyamide, Styrol-basierte Polymere etc. erzeugen.

Beispiele für die Einheiten der Formel (IV) im Copolymer (E) sind solche mit
R¹ = Methyl, R³ = -(CH₂)₂-, R⁴ = H, Y = -(CH₂)₃-, p = 1; n = 140,
R¹ = Methyl, R³ = -(CH₂)₆-, R⁴ = H, Y = -(CH₂)₃-, p = 1; n = 140,
R¹ = Methyl, R³ = -(CH₂)₂-, R⁴ = H, Y = -(CH₂)₃-, p = 1; n = 50,
R¹ = Methyl, R³ = -(CH₂)₆ R⁴ = H, Y = -(CH₂)₃-, p = 1; n = 50,
R¹ = Methyl, R³ = -(CH₂)₆-, R⁴ = H, Y = -(CH₂)₃-, p = 2; n = 140 und
R¹ = Methyl, R³ = -(CH₂)₂-, R⁴ = H, Y = -(CH₂)₃-, p = 1; n = 250, wobei solche aus Einheiten der Formel (IV) mit
R¹ = Methyl, R³ = -(CH₂)₂-, R⁴ = H, Y = -(CH₂)₃-, p = 1; n = 140,
R¹ = Methyl, R³ = -(CH₂)₆-, R⁴ = H, Y = -(CH₂)₃-, p = 1; n = 140 oder
R¹ = Methyl, R³ = -(CH₂)₂-, R⁴ = H, Y = -(CH₂)₃-, p = 1; n = 50 bevorzugt sind und solche aus Einheiten der Formel (IV) mit
R¹ = Methyl, R³ = -(CH₂)₂-, R⁴ = H, Y = -(CH₂)₃-, p = 1; n = 140 oder
R¹ = Methyl, R³ = -(CH₂)₂-, R⁴ = H, Y = -(CH₂)₃-, p = 1; n = 50 besonders bevorzugt sind.

Vorzugsweise bestehen die Endgruppen der Copolymere (E) wahlweise aus nicht-abreagierten Amino-Endgruppen der Komponenten (B) oder (C) oder aus nicht abreagierten Oxamido-Estergruppen der Komponente (A), wobei als Endgruppen die nicht abreagierten Oxamido-Ester-Endgruppen der Komponente (A) bevorzugt sind, weil nicht abreagierte Amino-Endgruppen gegebenenfalls bei höheren Prozesstemperaturen zu Verfärbungen führen können und damit die Farbe der erfindungsgemäßen Zusammensetzung nachträglich verändert wird.

Typische Beispiele für Copolymere (E) sind Reaktionsprodukte der im erfindungsgemäßen Verfahren eingesetzten
Siloxane (A) der Formel (I) mit R¹ = Methyl, R² = H₃C-CH₂-, Y = -(CH₂)₃-, p = 1; n = 140 und Verbindung (B) der Formel (II) mit R³ = -(CH₂)₂-, R⁴ = H oder
Siloxane (A) der Formel (I) mit R¹ = Methyl, R² = H₃C-CH₂-, Y = -(CH₂)₃-, p = 1; n = 50 und Verbindung (B) der Formel (II) mit R³ = -(CH₂)₂-, R⁴ = H oder
Siloxane (A) der Formel (I) mit R¹ = Methyl, R² = H₃C-CH₂-, Y = -(CH₂)₃-, p = 1; n = 250 und Verbindung (B) der Formel (II) mit R³ = -(CH₂)₂-, R⁴ = H oder
Siloxane (A) der Formel (I) mit R¹ = Methyl, R² = H₃C-CH₂-, Y = -(CH₂)₃-, p = 1; n = 140 und Verbindung (B) der Formel (II) mit R³ = -(CH₂)₆-, R⁴ = H oder
Siloxane (A) der Formel (I) mit R¹ = Methyl, R² = H₃C-CH₂-, Y = -(CH₂)₃-, p = 1; n = 140 und Verbindung (B) der Formel (II) mit R³ = -(CH₂)₂-, R⁴ = H und Verbindung (C) der Formel (III) mit R⁶ = Methyl, R⁵ = H, Y¹ = -(CH₂)₃-, m = 140 oder
Siloxane (A) der Formel (I) mit R¹ = Methyl, R² = H₃C-CH₂-, Y = -(CH₂)₃-, p = 1; n = 50 und Verbindung (B) der Formel (II) mit R³ = -(CH₂)₆-, R⁴ = H und Verbindung (C) der Formel (III) mit R⁶ = Methyl, R⁵ = H, Y¹ = -(CH₂)₃-, m = 140 oder
Siloxane (A) der Formel (I) mit R¹ = Methyl, R² = H₃C-, Y = -(CH₂)₃-, p = 1; n = 200 und Verbindung (B) der Formel (II) mit R³ = -(CH₂)₂-, R⁴ = H und Verbindung (C) der Formel (III) mit R⁶ = Methyl, R⁵ = H, Y¹ = -(CH₂)₃-, m = 140 oder
Siloxane (A) der Formel (I) mit R¹ = Methyl, R² = H₃C-CH₂-, Y = -(CH₂)₃-, p = 1; n = 140 und Verbindung (B) der Formel (II) mit R³ = -(CH₂)₂-, R⁴ = H und Verbindung (B) der Formel (II) mit R³ = -[(CHCH₃-CH₂-O)₆(C₂H₄-0)₁₂]-(CH₂-CHCH₃) -, R⁴ = H oder
Siloxane (A) der Formel (I) mit R¹ = Methyl, R² = H₃C-CH₂-, Y = -(CH₂)₃-, p = 1; n = 50 und Verbindung (B) der Formel (II) mit R³ = -(CH₂)₆-, R⁴ = H und Verbindung (B) der Formel (II) mit R³ = -[(CHCH₃-CH₂-0)₆(C₂H₄-0)₃₉]- (CH₂-CHCH₃) -, R⁴ = H oder
Siloxane (A) der Formel (I) mit R¹ = Methyl, R² = H₃C-, Y = -(CH₂)₃-, p = 1; n = 200 und Verbindung (B) der Formel (II) mit R³ = -(CH₂)₂-, R⁴ = H und Verbindung (B) der Formel (II) mit R³ = -[(CHCH₃-CH₂-O)₄(C₂H₄-0)₉]-(CH₂-CHCH₃) -, R⁴ = H.

Copolymere (E) in den erfindungsgemäßen Zusammensetzungen besitzen ein Molekulargewicht (Zahlenmittel) von vorzugsweise 20 000 g/mol bis 1 000 000 g/mol, bevorzugt 40 000 g/mol bis 200 000 g/mol, jeweils gemessen bei 45°C in THF mittel Size Exclusion Chromatography (SEC).

Bevorzugt handelt es sich bei den erfindungsgemäßen Zusammensetzungen um solche enthaltend
(E) Copolymere enthaltend Einheiten der Formel (IV),
(D) Pigmente sowie
gegebenenfalls (F) Additive.

Besonders bevorzugt handelt es sich bei den erfindungsgemäßen Zusammensetzungen um solche enthaltend
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) anorganische Pigmente aus der Gruppe der Oxide oder
(E) Copolymere enthaltend Einheiten der Formel (IV) mit R¹ = Methyl, R³ = -(CH₂)₆-, R⁴ = H, Y = -(CH₂)₃-, p = 1; n = 140 und (D) anorganische Pigmente aus der Gruppe der Oxide oder
(E) Copolymere enthaltend Einheiten der Formel (IV) mit R¹ = Methyl, R³ = -(CH₂)₂-, R⁴ = H, Y = -(CH₂)₃-, p = 1; n = 250 und (D) anorganische Pigmente aus der Gruppe der Oxide oder
(E) Copolymere enthaltend Einheiten der Formel (IV) mit R¹ = Methyl, R³ = -(CH₂)₂-, R⁴ = H, Y = -(CH₂)₃-, p = 1; n = 50 und (D) anorganische Pigmente aus der Gruppe der Oxide oder
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) organische Pigmente oder
(E) Copolymere enthaltend Einheiten der Formel (IV) mit R¹ = Methyl, R³ = -(CH₂)₆-, R⁴ = H, Y = -(CH₂)₃-, p = 1; n = 140 und (D) organische Pigmente oder
(E) Copolymere enthaltend Einheiten der Formel (IV) mit R¹ = Methyl, R³ = -(CH₂)₂-, R⁴ = H, Y = -(CH₂)₃-, p = 1; n = 250 und (D) organische Pigmente oder
(E) Copolymere enthaltend Einheiten der Formel (IV) mit R¹ = Methyl, R³ = -(CH₂)₂-, R⁴ = H, Y = -(CH₂)₃-, p = 1; n = 50 und (D) organische Pigmente oder
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) anorganische Pigmente aus der Gruppe der Ruße oder
(E) Copolymere enthaltend Einheiten der Formel (IV) mit R¹ = Methyl, R³ = -(CH₂)₆-, R⁴ = H, Y = -(CH₂)₃-, p = 1; n = 140 und (D) anorganische Pigmente aus der Gruppe der Ruße oder
(E) Copolymere enthaltend Einheiten der Formel (IV) mit R¹ = Methyl, R³ = -(CH₂)₂-, R⁴ = H, Y = -(CH₂)₃-, p = 1; n = 250 und (D) anorganische Pigmente aus der Gruppe der Ruße oder
(E) Copolymere enthaltend Einheiten der Formel (IV) mit R¹ = Methyl, R³ = -(CH₂)₂-, R⁴ = H, Y = -(CH₂)₃-, p = 1; n = 50 und (D) anorganischen Pigmenten aus der Gruppe der Ruße.

Weiterhin bevorzugt sind Zusammensetzungen enthaltend
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) anorganische Pigmente aus der Gruppe der Ruße oder
(E) Copolymere enthaltend Einheiten der Formel (IV) mit R¹ = Methyl, R³ = -(CH₂)₆-, R⁴ = H, Y = -(CH₂)₃-, p = 1; n = 140 und (D) anorganische Pigmente aus der Gruppe der Ruße oder
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) anorganische Pigmente aus der Gruppe der Oxide oder
(E) Copolymere enthaltend Einheiten der Formel (IV) mit R¹ = Methyl, R³ = -(CH₂)₆-, R⁴ = H, Y = -(CH₂)₃-, p = 1; n = 140 und (D) anorganische Pigmente aus der Gruppe der Oxide oder
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) organische Pigmente oder
(E) Copolymere enthaltend Einheiten der Formel (IV) mit R¹ = Methyl, R³ = -(CH₂)₆-, R⁴ = H, Y = -(CH₂)₃-, p = 1; n = 140 und (D) organische Pigmente.

Insbesondere bevorzugt sind Zusammensetzungen enthaltend
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) anorganische Pigmente aus der Gruppe der Ruße oder
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) anorganische Pigmente aus der Gruppe der Oxide oder
(E) Copolymere enthaltend Einheiten der Formel (IV) mit R¹ = Methyl, R³ = -(CH₂)₂-, R⁴ = H, Y = -(CH₂)₃-, p = 1; n = 140 und (D) organische Pigmente.

Bei den einzelnen Bestandteilen der erfindungsgemäßen Zusammensetzungen kann es sich jeweils um eine Art eines solchen Bestandteils wie auch um ein Gemisch aus mindestens zwei verschiedenen Arten derartiger Bestandteile handeln.

Die erfindungsgemäßen bzw. erfindungsgemäß hergestellten Zusammensetzungen können nun für alle Zwecke eingesetzt werden, für die auch bisher Farbmittel enthaltende Zusammensetzungen eingesetzt worden sind, bevorzugt als farbgebender Zusatz bei der Herstellung von Kunststoffen, Kunststoffprofilen oder Kunststoff fasern.

Ein weiterer Gegenstand der Erfindung ist ein Verfahren zur Herstellung von gefärbten Formkörpern durch Vermischen eines Polymerwerkstoffes mit der erfindungsgemäßen oder erfindungsgemäß hergestellten, Farbmittel enthaltenden Zusammensetzung, Aufschmelzen und Homogenisieren der so erhaltenen Mischung und anschließender formgebender Abkühlen der Mischung.

Das erfindungsgemäße Verfahren zur Herstellung von gefärbten Formkörpern kann kontinuierlich, halbkontinuierlich oder diskontinuierlich durchgeführt werden.

Das erfindungsgemäße Verfahren zur Herstellung von gefärbten Formkörpern kann nach verschiedenen und bisher bekannten Arbeitsweisen abhängig von den eingesetzten Polymerwerkstoffen erfolgen, wie z.B. bei den für den 2. Schritt des erfindungsgemäßen Verfahrens zur Herstellung der erfindungsgemäßen Zusammensetzungen definierten Drücken, Temperaturen und Anlagen.

Bevorzugte Beispiele für erfindungsgemäß eingesetzte Polymerwerkstoffe sind Polyethylen, Polypropylen, Polyamid, Polyethylenterephthalat, Polybutylenterephthalat, thermoplastische Elastomere auf Basis von vernetztem Kautschuk, Ethylen-Vinylacetat, Polyhydroxybutyrat und/oder Copolymere oder Mischungen hiervon sowie Polystyrol, schlagzähmodifiziertes Polystyrol, Styrol-Acrylnitril-Copolymere, Acrylnitril-Butadien-Styrol-Copolymere, Polyvinylchlorid, Polyvinylidenfluorid, Ethylentetrafluorethylen (ETFE), Polymethylmethacrylat, Polycarbonat, Polyaryletherketon, Polyacrylnitril, Polyetherimid, Polyethylennaphthalat, Polyethersulfon, Polyimid, Polyketon, Polyoxymethylen, Polyphenylensulfid, Polyphenylensulfon, Polysulfon, Styrol-Butadien-Kautschuk, Acrylnitril-Butadien-Kautschuk, Naturkautschuk und deren Copolymere oder Mischungen, wobei Polyethylen, Polypropylen, Polyamid, Polyethylenterephthalat oder Polybutylenterephthalat besonders bevorzugt sind.

Die erfindungsgemäß eingefärbten Polymerwerkstoffe sind dabei insbesondere herstellbar durch Mischen mindestens eines Polymerwerkstoffs mit der erfindungsgemäßen bzw. erfindungsgemäß hergestellten Zusammensetzung in geschmolzenem Zustand und Abkühlen der erhaltenen Mischung. Bevorzugt liegen die erfindungsgemäß eingefärbten Polymerwerkstoffe in Form eines Formkörpers vor, erhältlich durch einen formgebenden Prozess ausgewählt aus der Gruppe bestehend aus Spritzgießen, Extrudieren, Formpressen, Walzenrotation, Rotationsformen, Lasersintern, Fused Deposition Modelling (FDM), Granulieren und/oder Gießen.

Als vorteilhaft hat sich insbesondere herausgestellt, dass die erfindungsgemäßen oder erfindungsgemäß hergestellten Farbmittel enthaltenden Zusammensetzungen sehr tolerant gegenüber einer Vielzahl von Kunststoffen sind und damit in für die Kunststoffverarbeitung und -modifizierung üblichen Einsatzkonzentrationen eine hohe Verträglichkeit mit einer Vielzahl von Polymerwerkstoffen bzw. Polymermischungen aufweisen.

Das erfindungsgemäße Verfahren hat den Vorteil, dass es sich hinsichtlich Verfahrensführung durch hohe Effizienz auszeichnet.

Es hat sich gezeigt, dass der erfindungsgemäße Farb-Masterbatch, der sich nach der erfindungsgemäßen Verfahrensführung herstellen lässt, eine ausgezeichnete Homogenität, d. h. keinen Konzentrationsgradienten des Farbmittels im Masterbatch, aufweist. Als weitere vorteilhafte Eigenschaften des Farb-Masterbatches sind die außerordentlich hohe thermische Beständigkeit, ein hervorragendes rheologisches Verhalten sowie ein ausgezeichnetes Spannungs-Dehnungs-Verhalten zu nennen.

Die erfindungsgemäßen Zusammensetzungen haben weiterhin den Vorteil, dass sie sich durch hohe Kompatibilität gegenüber zugesetzten Farbmitteln und deren eingesetzten Mengen auszeichnen und deutlich höhere thermische Beständigkeit v.a.im Bereich höherer Temperaturen über 250 °C aufweisen.

Ein weiterer Vorteil des erfindungsgemäßen Verfahrens ist, dass nach der Dispergierung der Farbmittel in die fluide Polymervorstufe eine weitere Dispergierung und Homogenisierung der Farbmittel in der ausreagierten Polymermatrix im Mischer bzw. Extruder erfolgt. Dadurch wird die Farbmittelverteilung im Farb-Masterbatch zusätzlich verbessert.

Das erfindungsgemäße Verfahren hat den Vorteil, dass die verwendeten Edukte sehr gut handhabbar sind und mit gängigen Apparaten verarbeitet werden können.

Die nachstehend beschriebenen Beispielen werden, sofern nicht anders angegeben, bei einem Druck der umgebenden Atmosphäre, also etwa bei 1000 hPa, und bei Raumtemperatur, also bei etwa 23°C bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Das zahlenmittlere Molekulargewicht Mn wird dabei im Rahmen der vorliegenden Erfindung mittels Size Exclusion Chromatography (SEC) gegen Polystyrol-Standard, in THF, bei 45°C, Flow Rate 1,0 ml/min und Detektion mit ELSD (verdampfender Lichtstreu-Detektor) auf einem Säulenset dreimal PLGel MixC Säulen von Agilent Technolgies mit einem Injektionsvolumen von 100 µL nach Acetylierung mit Essigsäureanhydrid bestimmt.
**Silicon 1:** Ethyloxalamido-propylterminiertes Polydimethylsiloxan der Formel
H₅C₂O-CO-CO-NH-C₃H₆-Si(CH₃)₂-[OSi(CH₃)₂]ₙ-OSi(CH₃)₂-C₃H₆-NH-CO-CO-OC₂H₅
mit einem zahlenmittleren Molekulargewicht Mn von 11457 g/mol,
**Diamin 1:** Ethylendiamin NH₂-(CH₂)₂-NH₂
**Diamin 2:** aliphatisches Polyether-Diamin mit einer Aminzahl von 3,3 meq/g (käuflich erhältlich unter der Bezeichnung "Jeffamine ED 600" bei der Fa. Huntsman, Everberg / BE)
**Zentrifugalmischer:** ARE 250 der Fa. C3-Analysentechnik, Haar / DE, hergestellt von Fa. Thinky Corporation, Tokyo / JP

### Beispiel 1

Es wurden 114,5 g Silicon 1 in einen 250 ml Polypropylenbecher eingewogen und anschließend 45 g TiO₂ (käuflich erhältlich unter der Bezeichnung Kronos 2225 Titaniumdioxid bei Kronos Titan GmbH, D-Leverkusen) als anorganisches Pigment hinzugegeben. Diese Mischung wurde für insgesamt 5 Minuten in einem Zentrifugalmischer bei einer Umdrehungszahl von 2000 U/min homogenisiert wodurch man eine flüssige Farbpaste erhielt. Danach wurden 0,6 g Diamin 1 zur Mischung hinzugegeben und die Mischung für weitere 120 Sekunden im Zentrifugalmischer bei 2000 U/min homogenisiert. Nach weiteren 20 Minuten isothermer Reaktionszeit ohne weiteres Rühren war die Mischung polymerisiert. Der gebildete feste Farb-Masterbatch wurde nun dem PP-Becher entnommen und in Stücke kleiner 5 mm zerschnitten.

### Beispiel 2

Es wurden 114,5 g des Silicon 1 in einen 250 ml Polypropylenbecher eingewogen und anschließend 45 g organischen Pigmentes Phthalocyanin Grün (käuflich erhältlich unter der Bezeichnung Heliogen^{®} Grün bei der Fa. Kremer Pigmente, D-Aichstetten) hinzugegeben. Diese Mischung wurde für insgesamt 5 Minuten in einem Zentrifugalmischer (ThinkY) bei einer Umdrehungszahl von 2000 U/min homogenisiert. Danach wurden 0,6 g Ethylendiamin zur Mischung hinzugegeben und die Mischung für weitere 120 Sekunden im Zentrifugalmischer bei 2000 U/min homogenisiert. Nach weiteren 20 Minuten isothermer Reaktionszeit ohne weiteres Rühren war die Mischung polymerisiert. Die gebildete Farb-Masterbatchmatrix wurde nun dem PP-Becher entnommen und in Stücke kleiner 5 mm zerschnitten.

### Beispiel 3

Es wurden 114,5 g des Silicon 1 in einen 250 ml Polypropylenbecher eingewogen und anschließend 90 g TiOz (käuflich erhältlich unter der Bezeichnung Kronos 2225 Titaniumdioxid bei Kronos Titan GmbH, D-Leverkusen) als anorganisches Pigment hinzugegeben. Diese Mischung wurde für insgesamt 5 Minuten in einem Zentrifugalmischer (ThinkY) bei einer Umdrehungszahl von 2000 U/min homogenisiert. Danach wurden 0,6 g Ethylendiamin zur Mischung hinzugegeben und die Mischung für weitere 120 Sekunden im Zentrifugalmischer bei 2000 U/min homogenisiert. Nach weiteren 20 Minuten isothermer Reaktionszeit ohne weiteres Rühren war die Mischung polymerisiert. Die gebildete Farb-Masterbatchmatrix wurde nun dem PP-Becher entnommen und in Stücke kleiner 5 mm zerschnitten.

### Beispiel 4

Es wurden 114,5 g des Silicon 1 in einen 250 ml Polypropylenbecher eingewogen und anschließend 45 g eines organischen Gelb-Pigmentes (käuflich erhältlich unter der Bezeichnung Pigment Gelb 83 bei der Fa. Kremer Pigmente, D-Aichstetten) hinzugegeben. Diese Mischung wurde für insgesamt 5 Minuten in einem Zentrifugalmischer (ThinkY) bei einer Umdrehungszahl von 2000 U/min homogenisiert. Danach wurden 0,6 g Ethylendiamin zur Mischung hinzugegeben und die Mischung für weitere 120 Sekunden im Zentrifugalmischer bei 2000 U/min homogenisiert. Nach weiteren 20 Minuten isothermer Reaktionszeit ohne weiteres Rühren war die Mischung polymerisiert. Die gebildete Farb-Masterbatchmatrix wurde nun dem PP-Becher entnommen und in Stücke kleiner 5 mm zerschnitten.

### Beispiel 5

Es wurden 114,5 g des Silicon 1 in einen 250 ml Polypropylenbecher eingewogen und anschließend 45 g Farbruß (käuflich erhältlich unter der Bezeichnung Printex 60A bei der Fa. Orion, D-Frankfurt am Main) hinzugegeben. Diese Mischung wurde für insgesamt 5 Minuten in einem Zentrifugalmischer (ThinkY) bei einer Umdrehungszahl von 2000 U/min homogenisiert. Danach wurden 0,6 g Ethylendiamin zur Mischung hinzugegeben und die Mischung für weitere 120 Sekunden im Zentrifugalmischer bei 2000 U/min homogenisiert. Nach weiteren 20 Minuten isothermer Reaktionszeit ohne weiteres Rühren war die Mischung polymerisiert. Die gebildete schwarze Farb-Masterbatchmatrix wurde nun dem PP-Becher entnommen und in Stücke kleiner 5 mm zerschnitten.

### Beispiel 6

Es wurden 114,5 g des Silicon 1 in einen 250 ml Polypropylenbecher eingewogen und anschließend 45,5 g Farbruß (käuflich erhältlich unter der Bezeichnung Printex 60 A bei der Fa. Orion, D-Frankfurt am Main) hinzugegeben. Diese Mischung wurde für insgesamt 5 Minuten in einem Zentrifugalmischer (ThinkY) bei einer Umdrehungszahl von 2000 U/min homogenisiert.

Im Anschluss daran wurde in einem zweiten 250 ml PP-Becher 114,5 g des Silicon 1 eingewogen und anschließend 45,5 g TiO₂ (käuflich erhältlich unter der Bezeichnung Kronos 2225 Titaniumdioxid bei der Kronos Titan GmbH, D-Leverkusen) hinzugegeben. Diese Mischung wurde ebenfalls für insgesamt 5 Minuten in einem Zentrifugalmischer (ThinkY) bei einer Umdrehungszahl von 2000 U/min homogenisiert.

Im Anschluss daran wurden jeweils 80 g dieser Mischungen in einen dritten 250 ml Polypropylenbecher gegeben, und danach wurden 0,6 g Ethyendiamin zur Mischung hinzugegeben und die Mischung für weitere 120 Sekunden im Zentrifugalmischer bei 2000 U/min homogenisiert. Nach weiteren 20 Minuten isothermer Reaktionszeit ohne weiteres Rühren war die Mischung polymerisiert. Die gebildete graue Farb-Masterbatchmatrix wurde nun dem PP-Becher entnommen und in Stücke kleiner 5 mm zerschnitten.

### Beispiel 7

Es wurden 114,5 g des Silicon 1 und 3 g Diamin 2 in einen 250 ml Polypropylenbecher eingewogen und anschließend 60 g eines Blau-Pigmentes (käuflich erhältlich unter der Bezeichnung Ultramarinblau, extra dunkel bei der Fa. Kremer Pigmente, D-Aichstetten) hinzugegeben. Diese Mischung wurde für insgesamt 5 Minuten in einem Zentrifugalmischer (ThinkY) bei einer Umdrehungszahl von 2000 U/min homogenisiert. Danach wurden 0,3 g Ethylendiamin zur Mischung hinzugegeben und die Mischung für weitere 120 Sekunden im Zentrifugalmischer bei 2000 U/min homogenisiert. Nach weiteren 20 Minuten isothermer Reaktionszeit ohne weiteres Rühren war die Mischung polymerisiert. Die gebildete blaue Farb-Masterbatchmatrix wurde nun dem PP-Becher entnommen und in Stücke kleiner 5 mm zerschnitten.

### Beispiel 8

Es wurden 114,5 g des Silicon 1 in einen 250 ml Polypropylenbecher eingewogen und anschließend 45,5 g organischen Gelb-Pigmentes (käuflich erhältlich unter der Bezeichnung Pigment Gelb 83 bei der Fa. Kremer Pigmente, D-Aichstetten) hinzugegeben. Diese Mischung wurde für insgesamt 5 Minuten in einem Zentrifugalmischer (ThinkY) bei einer Umdrehungszahl von 2000 U/min homogenisiert.

Im Anschluss daran wurden in einem zweiten 250 ml PP-Becher 114,5 g des Silicon 1 eingewogen und anschließend 45,5 g Blau-Pigmentes (käuflich erhältlich unter der Bezeichnung Ultramarinblau, extra dunkel bei der Fa. Kremer Pigente, D-Aichstetten) hinzugegeben. Diese Mischung wurde ebenfalls für insgesamt 5 Minuten in einem Zentrifugalmischer (ThinkY) bei einer Umdrehungszahl von 2000 U/min homogenisiert.

Im Anschluss daran wurden die beiden oben hergestellten Basispasten im Verhältnis 120 g gelbe Paste zu 40 g blaue Paste, 80 g gelbe Paste zu 80 g blaue Paste und 40 g gelbe Paste zu 120 g blaue Paste jeweils in einen separaten 250 ml Polypropylenbecher gegeben, und danach wurden jeweils 0,6 g Ethylendiamin zu den Mischungen hinzugegeben und diese nacheinander für weitere 120 Sekunden im Zentrifugalmischer bei 2000 U/min homogenisiert. Nach weiteren 20 Minuten isothermer Reaktionszeit ohne weiteres Rühren waren die Mischungen polymerisiert. Die gebildete Farb-Masterbatchmatrix zeigte abhängig vom Mischungsverhältnis der Basispasten (gelb und blau) verschiedene Grüntöne und wurde nach Entnahme aus dem PP-Becher in Stücke kleiner 5 mm zerschnitten.

Durch nachfolgendes Granulieren bei 20°C und 1013 hPa wurde ein rieselfähiges, klebfreies Farb-Masterbatch erhalten.

### Beispiel 9

2,5 kg TPU 1 (thermoplastisches Polyurethan; käuflich erhältlich unter der Bezeichnung Elastollan^{®} SP 9264 bei BASF SE, D-Ludwigshafen) wurden mit 0,05 kg Farbmasterbatch aus Beispiel 3 jeweils in Granulatform bei Raumtemperatur vermischt und über einen Trichter in einem gegenläufigen Zwei-Wellen Extruder ZK 25 der Fa. Collin (D-Ebersberg) in Zone 1 zugegeben und compoundiert. Dabei betrug die Temperatur im Einzugsbereich (Zone 1) 100°C, wurde in Zone 2 auf 160°C und in Zone 3 auf 165°C gesteigert. Zone 4 und Zone 5 hatten 170°C, und die Düse wurde auf 165°C temperiert. Die Umdrehungsgeschwindigkeit der Schnecken betrug 60 Umdrehungen / Minute. Die erhaltene homogene Schmelze wurde aus einer Düse mit einem Durchmesser von 4 mm als Strang kontinuierlich extrudiert und abgekühlt. Man erhielt 2,5 kg eines homogen durchgefärbten weißen TPU-Stranges mit einer Dicke von 5 mm.

### Beispiel 10

3,5 kg eines thermoplastischen Copolyamid (Copolymer aus Polyamid 12 und Polytetramethylenglykol mit einer Härte von 81 Shore A, käuflich erhältlich unter der Bezeichnung PEBAX^{®} 3533 bei Arkema SA, FR-Colombes) wurden mit 0,07 kg eines Farbmasterbatches aus Beispiel 7 jeweils in Granulatform vermischt und kontinuierlich über einen Trichter in einem gegenläufigen Zwei-Wellen Extruder ZK 25 der Fa. Collin (D-Ebersberg) in Zone 1 zugegeben und compoundiert. Dabei betrug die Temperatur im Einzugsbereich (Zone 1) 100°C, wurde in Zone 2 auf 180°C und in Zone 3 auf 195°C gesteigert. Zone 4 und Zone 5 hatten 190°C, und die Düse wurde auf 190°C temperiert. Die Umdrehungsgeschwindigkeit der Schnecken betrug 60 Umdrehungen / Minute. Die erhaltene homogene Schmelze wurde mittels einer Düse mit dem Durchmesser 4 mm als Strang kontinuierlich extrudiert und in einem Wasserbad auf 30°C abgekühlt. Man erhielt 3,5 kg eines homogen blau durchgefärbten thermoplastischen Polyamid-Stranges mit einer Dicke von 5 mm.

### Beispiel 11

3,5 kg eines thermoplastischen Polyamid 6 (käuflich erhältlich unter der Bezeichnung Akulon K122 bei DMS, NL-Geleen) wurden mit 0,1 kg eines Farbmasterbatches aus Beispiel 5 jeweils in Granulatform vermischt und kontinuierlich über einen Trichter in einem gegenläufigen Zwei-Wellen Extruder 5 der Fa. Collin (D-Ebersberg) in Zone 1 zugegeben und compoundiert. Dabei betrug die Temperatur im Einzugsbereich (Zone 1) 140°C, wurde in Zone 2 auf 220°C und in Zone 3 auf 235°C gesteigert. Zone 4 und Zone 5 hatten 230°C, und die Düse wurde auf 220°C temperiert. Die Umdrehungsgeschwindigkeit der Schnecken betrug 60 Umdrehungen / Minute. Die erhaltene homogene Schmelze wurde mittels einer Düse mit dem Durchmesser 4 mm als Strang kontinuierlich extrudiert und in einem Wasserbad auf 30°C abgekühlt. Man erhielt 3,5 kg eines homogen schwarz durchgefärbten thermoplastischen Polyamid-Stranges mit einer Dicke von 4,5 mm.

### Beispiel 12

3,5 kg eines thermoplastischen Polyamid 6 (käuflich erhältlich unter der Bezeichnung Akulon K122 bei DMS, NL-Geleen) wurden mit 0,1 kg eines Farbmasterbatches aus Beispiel 5 jeweils in Granulatform vermischt und kontinuierlich über einen Trichter auf einer Spritzgussmaschine Engel ES600/125 der Fa. Engel (AT-Schwertberg) verarbeitet. Dabei betrug die Temperatur im Einzugsbereich (Zone 1) 213°C, wurde in Zone 2 auf 220°C und in Zone 3 auf 235°C gesteigert. Die Düsentemperatur betrug 235°C, und Anguss und Auswerfer wurden auf 50°C temperiert. Der Formeninnendruck betrug 370 bar. Bei einer Kühldauer von 35 sec wurden Testplatten taktweise gespritzt, die alle homogen schwarz eingefärbt waren und einen E-Modul von 2,3 GPa hatten, vergleichbar mit einem nicht eingefärbten Material.

## Patentansprüche

1. Farbmittel enthaltende Zusammensetzungen enthaltend (D) mindestens ein Farbmittel,
(E) mindestens ein Siloxan-Polyoxamid-Copolymer enthaltend Einheiten der allgemeinen Formel (IV) 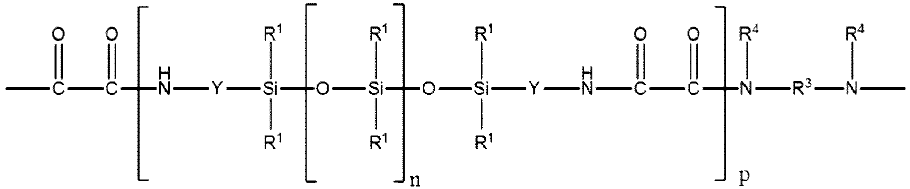 wobei
R¹ gleich oder verschieden sein kann und einen einwertigen, SiC-gebundenen, gegebenenfalls substituierten Kohlenwasserstoffrest bedeutet, der durch Heteroatome unterbrochen sein kann,
Y gleich oder verschieden sein kann und bivalente, gegebenenfalls substituierte Kohlenwasserstoffreste mit 1 bis 40 Kohlenstoffatomen bedeutet, wobei einzelne Kohlenstoffatome durch Sauerstoffatome oder -NR- ersetzt sein können,
R gleich Wasserstoffatom oder einen einwertigen, gegebenenfalls substituierten Kohlenwasserstoffrest bedeutet,
R³ einen bivalenten, gegebenenfalls substituierten Kohlenwasserstoffrest mit 1 bis 40 Kohlenstoffatomen bedeutet, wobei einzelne Kohlenstoffatome durch Sauerstoffatome oder -NR'- ersetzt sein können,
R' gleich Wasserstoffatom oder einen einwertigen, gegebenenfalls substituierten Kohlenwasserstoffrest bedeutet,
R⁴ gleich oder verschieden sein kann und Wasserstoffatom oder einen einwertigen, gegebenenfalls substituierten Kohlenwasserstoffrest darstellt, der durch Heteroatome unterbrochen sein kann,
n gleich 0 oder eine Zahl von 1 bis 1000 ist und
p gleich 0 oder eine Zahl von 1 bis 10 ist,
sowie
gegebenenfalls (F) Additive,
hergestellt nach einem Verfahren, bei dem
in einem 1. Schritt mindestens ein Siloxan (A) der allgemeinen Formel (I) 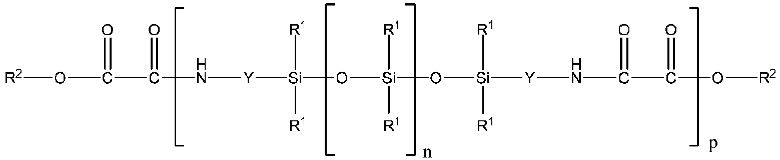 wobei
R¹ gleich oder verschieden sein kann und einen einwertigen, SiC-gebundenen, gegebenenfalls substituierten Kohlenwasserstoffrest bedeutet, der durch Heteroatome unterbrochen sein kann,
R² gleich oder verschieden sein kann und Wasserstoffatom oder einen einwertigen, gegebenenfalls substituierten Kohlenwasserstoffrest darstellt, der durch Heteroatome unterbrochen sein kann,
Y gleich oder verschieden sein kann und bivalente, gegebenenfalls substituierte Kohlenwasserstoffreste mit 1 bis 40 Kohlenstoffatomen bedeutet, wobei einzelne Kohlenstoffatome durch Sauerstoffatome oder -NR- ersetzt sein können,
R gleich Wasserstoffatom oder einen einwertigen, gegebenenfalls substituierten Kohlenwasserstoffrest bedeutet,
n gleich 0 oder eine Zahl von 1 bis 1000 ist und
p gleich 0 oder eine Zahl von 1 bis 10 ist,
mindestens eine Verbindung (B) der allgemeinen Formel
R⁴NH-R³-NR⁴H (II),
wobei
R³ einen bivalenten, gegebenenfalls substituierten Kohlenwasserstoffrest mit 1 bis 40 Kohlenstoffatomen bedeutet, wobei einzelne Kohlenstoffatome durch Sauerstoffatome oder -NR'- ersetzt sein können,
R' gleich Wasserstoffatom oder einen einwertigen, gegebenenfalls substituierten Kohlenwasserstoffrest bedeutet und
R⁴ gleich oder verschieden sein kann und Wasserstoffatom oder einen einwertigen, gegebenenfalls substituierten Kohlenwasserstoffrest darstellt, der durch Heteroatome unterbrochen sein kann,
(D) mindestens ein Farbmittel,
gegebenenfalls Verbindung (C) der allgemeinen Formel
R³NH-Y⁴-SiR⁶₂-[O-SiR⁶₂]ₘ-O-SiR⁶₂-Y¹-NHR⁵ (III),
wobei
R⁶ gleich oder verschieden sein kann und einen einwertigen, SiC-gebundenen, gegebenenfalls substituierten Kohlenwasserstoffrest bedeutet, der durch Heteroatome unterbrochen sein kann,
R⁵ gleich oder verschieden sein kann und Wasserstoffatom oder einen einwertigen, gegebenenfalls substituierten Kohlenwasserstoffrest darstellt, der durch Heteroatome unterbrochen sein kann,
Y¹ gleich oder verschieden sein kann und bivalente, gegebenenfalls substituierte Kohlenwasserstoffreste mit 1 bis 40 Kohlenstoffatomen bedeutet, wobei einzelne Kohlenstoffatome durch Sauerstoffatome oder -NR"- ersetzt sein können,
R" gleich Wasserstoffatom oder einen einwertigen, gegebenenfalls substituierten Kohlenwasserstoffrest bedeutet, und
m gleich 0 oder eine Zahl von 1 bis 1000 ist,
und
gegebenenfalls Additive (F)
miteinander vermischt und reagieren gelassen werden, sowie gegebenenfalls in einem 2. Schritt die im 1. Schritt erhaltene Zusammensetzung aufgeschmolzen und anschließend granuliert wird, wobei Farbmittel (D) in Mengen von 2 bis 400 Gewichtsteilen, bezogen auf 100 Gewichtsteile der Komponenten (A), eingesetzt werden.

2. Zusammensetzungen gemäß Anspruch 1, **dadurch gekennzeichnet, dass** es sich um solche enthaltend
(E) Copolymere enthaltend Einheiten der Formel (IV),
(D) Pigmente sowie
gegebenenfalls (F) Additive
handelt.

3. Zusammensetzungen gemäß Anspruch 1 oder 2, **dadurch gekennzeichnet, dass** Copolymere (E) ein Molekulargewicht (Zahlenmittel) von 20 000 g/mol bis 1 000 000 g/mol besitzen, gemessen bei 45°C in THF mittel Size Exclusion Chromatography (SEC).

4. Verfahren zur Herstellung von Farbmittel enthaltenden Zusammensetzungen, bei dem
in einem 1. Schritt mindestens ein Siloxan (A) der allgemeinen Formel (I) 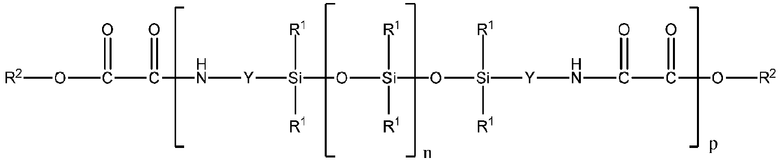 wobei
R¹ gleich oder verschieden sein kann und einen einwertigen, SiC-gebundenen, gegebenenfalls substituierten Kohlenwasserstoffrest bedeutet, der durch Heteroatome unterbrochen sein kann,
R² gleich oder verschieden sein kann und Wasserstoffatom oder einen einwertigen, gegebenenfalls substituierten Kohlenwasserstoffrest darstellt, der durch Heteroatome unterbrochen sein kann,
Y gleich oder verschieden sein kann und bivalente, gegebenenfalls substituierte Kohlenwasserstoffreste mit 1 bis 40 Kohlenstoffatomen bedeutet, wobei einzelne Kohlenstoffatome durch Sauerstoffatome oder -NR- ersetzt sein können,
R gleich Wasserstoffatom oder einen einwertigen, gegebenenfalls substituierten Kohlenwasserstoffrest bedeutet,
n gleich 0 oder eine Zahl von 1 bis 1000 ist und
p gleich 0 oder eine Zahl von 1 bis 10 ist,
mindestens eine Verbindung (B) der allgemeinen Formel
R⁴NH-R³-NR⁴H (II),
wobei
R³ einen bivalenten, gegebenenfalls substituierten Kohlenwasserstoffrest mit 1 bis 40 Kohlenstoffatomen bedeutet, wobei einzelne Kohlenstoffatome durch Sauerstoffatome oder -NR'- ersetzt sein können,
R' gleich Wasserstoffatom oder einen einwertigen, gegebenenfalls substituierten Kohlenwasserstoffrest bedeutet und
R⁴ gleich oder verschieden sein kann und Wasserstoffatom oder einen einwertigen, gegebenenfalls substituierten Kohlenwasserstoffrest darstellt, der durch Heteroatome unterbrochen sein kann,
(D) mindestens ein Farbmittel,
gegebenenfalls Verbindung (C) der allgemeinen Formel
R⁵NH-Y⁴-SiR⁶₂-[O-SiR⁶₂]ₘ-O-SiR⁶₂-Y¹-NHR⁵ (III),
wobei
R⁶ gleich oder verschieden sein kann und einen einwertigen, SiC-gebundenen, gegebenenfalls substituierten Kohlenwasserstoffrest bedeutet, der durch Heteroatome unterbrochen sein kann,
R⁵ gleich oder verschieden sein kann und Wasserstoffatom oder einen einwertigen, gegebenenfalls substituierten Kohlenwasserstoffrest darstellt, der durch Heteroatome unterbrochen sein kann,
Y¹ gleich oder verschieden sein kann und bivalente, gegebenenfalls substituierte Kohlenwasserstoffreste mit 1 bis 40 Kohlenstoffatomen bedeutet, wobei einzelne Kohlenstoffatome durch Sauerstoffatome oder -NR"- ersetzt sein können,
R" gleich Wasserstoffatom oder einen einwertigen, gegebenenfalls substituierten Kohlenwasserstoffrest bedeutet, und
m gleich 0 oder eine Zahl von 1 bis 1000 ist,
und
gegebenenfalls Additive (F)
miteinander vermischt und reagieren gelassen werden, sowie gegebenenfalls in einem 2. Schritt die im 1. Schritt erhaltene Zusammensetzung aufgeschmolzen und anschließend granuliert wird, wobei Farbmittel (D) in Mengen von 2 bis 400 Gewichtsteilen, bezogen auf 100 Gewichtsteile der Komponenten (A), eingesetzt werden.

5. Verfahren gemäß Anspruch 4, **dadurch gekennzeichnet, dass** es sich bei Farbmittel (D) um Pigmente handelt.

6. Verfahren gemäß einem oder mehreren der Ansprüche 4 bis 5, **dadurch gekennzeichnet, dass** im 1. Schritt die Einmischung der Farbmittel (D) in eine oder mehrere der Komponenten (A), (B) oder (C) erfolgt.

7. Verfahren gemäß einem oder mehreren der Ansprüche 4 bis 6, **dadurch gekennzeichnet, dass** das Aufschmelzen im 2. Schritt bei Temperaturen von 50 bis 250°C bei Drücken von 100 bis 30 000 hPa durchgeführt wird.

8. Verfahren zur Herstellung von gefärbten Formkörpern durch Vermischen eines Polymerwerkstoffes mit der Farbmittel enthaltenden Zusammensetzung gemäß einem oder mehreren der Ansprüche 1 bis 3 oder hergestellt nach einem oder mehreren der Ansprüche 4 bis 7, Aufschmelzen und Homogenisieren der so erhaltenen Mischung und anschließendem formgebenden Abkühlen der Mischung.

9. Verfahren nach Anspruch 8, **dadurch gekennzeichnet, dass** es sich bei den eingesetzten Polymerwerkstoffen um Polyethylen, Polypropylen, Polyamid, Polyethylenterephthalat, Polybutylenterephthalat, thermoplastische Elastomere auf Basis von vernetztem Kautschuk, Ethylen-Vinylacetat, Polyhydroxybutyrat und/oder Copolymere oder Mischungen hiervon sowie Polystyrol, schlagzähmodifiziertes Polystyrol, Styrol-Acrylnitril-Copolymere, Acrylnitril-Butadien-Styrol-Copolymere, Polyvinylchlorid, Polyvinylidenfluorid, Ethylentetrafluorethylen (ETFE), Polymethylmethacrylat, Polycarbonat, Polyaryletherketon, Polyacrylnitril, Polyetherimid, Polyethylennaphthalat, Polyethersulfon, Polyimid, Polyketon, Polyoxymethylen, Polyphenylensulfid, Polyphenylensulfon, Polysulfon, Styrol-Butadien-Kautschuk, Acrylnitril-Butadien-Kautschuk, Naturkautschuk und deren Copolymere oder Mischungen handelt.

## Claims

1. Colorant-containing compositions comprising
(D) at least one colorant,
(E) at least one siloxane-polyoxamide copolymer comprising units of the general formula (IV) 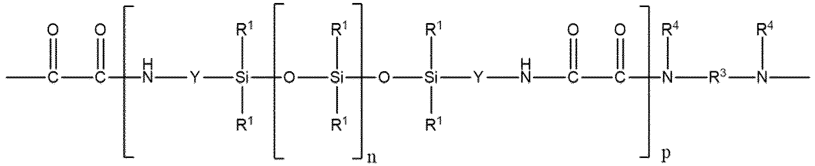 where
R¹ may be identical or different and is a monovalent, SiC-bonded, optionally substituted hydrocarbon radical which may be interrupted by heteroatoms,
Y may be identical or different and denotes divalent, optionally substituted hydrocarbon radicals having 1 to 40 carbon atoms, where individual carbon atoms may be replaced by oxygen atoms or -NR-,
R is hydrogen atom or a monovalent, optionally substituted hydrocarbon radical,
R³ is a divalent, optionally substituted hydrocarbon radical having 1 to 40 carbon atoms, where individual carbon atoms may be replaced by oxygen atoms or -NR'-,
R' is hydrogen atom or a monovalent, optionally substituted hydrocarbon radical,
R⁴ may be identical or different and is hydrogen atom or a monovalent, optionally substituted hydrocarbon radical, which may be interrupted by heteroatoms,
n is 0 or a number from 1 to 1000 and
p is 0 or a number from 1 to 10,
and also
optionally (F) additives,
produced by a process wherein
in a 1st step at least one siloxane (A) of the general formula (I) 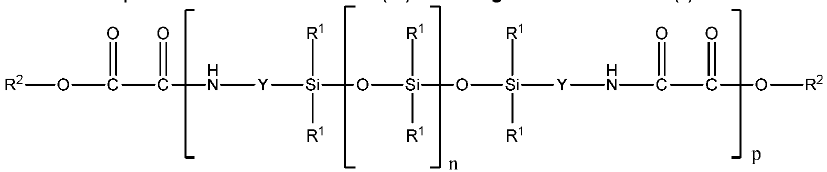 where
R¹ may be identical or different and is a monovalent, SiC-bonded, optionally substituted hydrocarbon radical which may be interrupted by heteroatoms, R² may be identical or different and is hydrogen atom or a monovalent, optionally substituted hydrocarbon radical, which may be interrupted by heteroatoms,
Y may be identical or different and denotes divalent, optionally substituted hydrocarbon radicals having 1 to 40 carbon atoms, where individual carbon atoms may be replaced by oxygen atoms or -NR-,
R is hydrogen atom or a monovalent, optionally substituted hydrocarbon radical,
n is 0 or a number from 1 to 1000 and
p is 0 or a number from 1 to 10,
at least one compound (B) of the general formula
R⁴NH-R³-NR⁴H (II),
where
R³ is a divalent, optionally substituted hydrocarbon radical having 1 to 40 carbon atoms, where individual carbon atoms may be replaced by oxygen atoms or -NR'-,
R' is hydrogen atom or a monovalent, optionally substituted hydrocarbon radical, and
R⁴ may be identical or different and is hydrogen atom or a monovalent, optionally substituted hydrocarbon radical, which may be interrupted by heteroatoms,
(D) at least one colorant,
optionally compound (C) of the general formula
R⁵NH-Y¹-SiR⁶₂-[O-SiR⁶₂]ₘ-O-SiR⁶₂-Y¹-NHR⁵ (III),
where
R⁶ may be identical or different and is a monovalent, SiC-bonded, optionally substituted hydrocarbon radical, which may be interrupted by heteroatoms,
R⁵ may be identical or different and is hydrogen atom or a monovalent, optionally substituted hydrocarbon radical, which may be interrupted by heteroatoms,
Y¹ may be identical or different and denotes divalent, optionally substituted hydrocarbon radicals having 1 to 40 carbon atoms, where individual carbon atoms may be replaced by oxygen atoms or -NR"-,
R" is hydrogen atom or a monovalent, optionally substituted hydrocarbon radical, and
m is 0 or a number from 1 to 1000,
and
optionally additives (F)
are mixed with one another and allowed to react, and also, optionally, in a 2nd step, the composition obtained in the 1st step is melted and subsequently pelletized, where colorants (D) are used in amounts of 2 to 400 parts by weight, based on 100 parts by weight of components (A).

2. Compositions according to Claim 1, **characterized in that** they are ones comprising
(E) copolymers comprising units of the formula (IV),
(D) pigments, and also
optionally (F) additives.

3. Compositions according to Claim 1 or 2, **characterized in that** copolymers (E) possess a molecular weight (number average) of 20 000 g/mol to 1 000 000 g/mol, measured at 45°C in THF by means of Size Exclusion Chromatography (SEC).

4. Process for producing colorant-containing compositions, wherein
in a 1st step at least one siloxane (A) of the general formula (I) 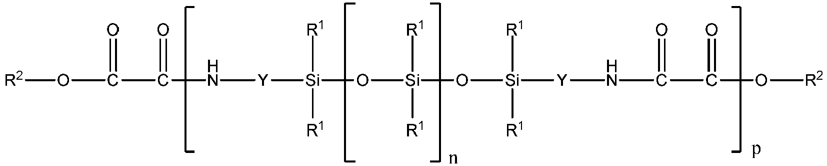 where
R¹ may be identical or different and is a monovalent, SiC-bonded, optionally substituted hydrocarbon radical which may be interrupted by heteroatoms,
R² may be identical or different and is hydrogen atom or a monovalent, optionally substituted hydrocarbon radical, which may be interrupted by heteroatoms,
Y may be identical or different and denotes divalent, optionally substituted hydrocarbon radicals having 1 to 40 carbon atoms, where individual carbon atoms may be replaced by oxygen atoms or -NR-,
R is hydrogen atom or a monovalent, optionally substituted hydrocarbon radical,
n is 0 or a number from 1 to 1000 and
p is 0 or a number from 1 to 10,
at least one compound (B) of the general formula
R⁴NH-R³-NR⁴H (II),
where
R³ is a divalent, optionally substituted hydrocarbon radical having 1 to 40 carbon atoms, where individual carbon atoms may be replaced by oxygen atoms or -NR'-,
R' is hydrogen atom or a monovalent, optionally substituted hydrocarbon radical, and
R⁴ may be identical or different and is hydrogen atom or a monovalent, optionally substituted hydrocarbon radical, which may be interrupted by heteroatoms,
(D) at least one colorant,
optionally compound (C) of the general formula
R⁵NH-Y¹-SiR⁶₂-[O-SiR⁶₂]ₘ-O-SiR⁶₂-Y¹-NHR⁵ (III),
where
R⁶ may be identical or different and is a monovalent, SiC-bonded, optionally substituted hydrocarbon radical, which may be interrupted by heteroatoms,
R⁵ may be identical or different and is hydrogen atom or a monovalent, optionally substituted hydrocarbon radical, which may be interrupted by heteroatoms,
Y¹ may be identical or different and denotes divalent, optionally substituted hydrocarbon radicals having 1 to 40 carbon atoms, where individual carbon atoms may be replaced by oxygen atoms or -NR"-,
R" is hydrogen atom or a monovalent, optionally substituted hydrocarbon radical, and
m is 0 or a number from 1 to 1000,
and
optionally additives (F)
are mixed with one another and allowed to react, and also, optionally, in a 2nd step, the composition obtained in the 1st step is melted and subsequently pelletized, where colorants (D) are used in amounts of 2 to 400 parts by weight, based on 100 parts by weight of components (A).

5. Process according to Claim 4, **characterized in that** colorant (D) comprises pigments.

6. Process according to one or more of Claims 4 to 5, **characterized in that** in the 1st step the colorants (D) are mixed into one or more of components (A), (B) or (C).

7. Process according to one or more of Claims 4 to 6, **characterized in that** the melting in the 2nd step is carried out at temperatures of 50 to 250°C under pressures of 100 to 30 000 hPa.

8. Process for producing colored shaped articles by mixing a polymer material with the colorant-containing composition according to one or more of Claims 1 to 3 or produced according to one or more of Claims 4 to 7, melting and homogenizing the resulting mixture, and subsequently shapingly cooling the mixture.

9. Process according to Claim 8, **characterized in that** the polymer materials used are polyethylene, polypropylene, polyamide, polyethylene terephthalate, polybutylene terephthalate, thermoplastic elastomers based on crosslinked rubber, ethylene-vinyl acetate, polyhydroxybutyrate and/or copolymers or mixtures thereof, and also polystyrene, impact-modified polystyrene, styrene-acrylonitrile copolymers, acrylonitrile-butadienestyrene copolymers, polyvinyl chloride, polyvinylidene fluoride, ethylene-tetrafluoroethylene (ETFE), polymethyl methacrylate, polycarbonate, polyaryletherketone, polyacrylonitrile, polyetherimide, polyethylene naphthalate, polyethersulfone, polyimide, polyketone, polyoxymethylene, polyphenylene sulfide, polyphenylene sulfone, polysulfone, styrenebutadiene rubber, acrylonitrile-butadiene rubber, natural rubber, and copolymers or mixtures thereof.

## Revendications

1. Compositions contenant des colorants, contenant
(D) au moins un colorant,
(E) au moins un copolymère siloxane-polyoxamide contenant des motifs de Formule générale (IV) 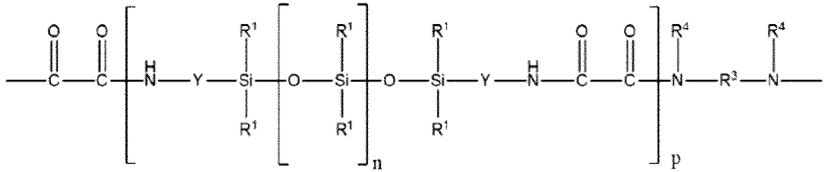 dans laquelle
R¹ peut être identique ou différent et représente un radical hydrocarboné monovalent, lié à SiC, éventuellement substitué, qui peut être interrompu par des hétéroatomes,
Y peut être identique ou différent et représente des radicaux hydrocarbonés divalents, éventuellement substitués, ayant 1 à 40 atomes de carbone, des atomes de carbone individuels pouvant être remplacés par des atomes d'oxygène ou par -NR-,
R représente un atome d'hydrogène ou un radical hydrocarboné monovalent, éventuellement substitué,
R³ représente un radical hydrocarboné divalent, éventuellement substitué, ayant 1 à 40 atomes de carbone, dans lequel des atomes de carbone individuels peuvent être remplacés par des atomes d'oxygène ou par -NR'-,
R' représente un atome d'hydrogène ou un radical hydrocarboné monovalent, éventuellement substitué,
R⁴ peut être identique ou différent et représente un atome d'hydrogène ou un radical hydrocarboné monovalent, éventuellement substitué, qui peut être interrompu par des hétéroatomes,
n est égal à 0 ou à un nombre de 1 à 1 000 et
p est égal à 0 ou à un nombre de 1 à 10,
ainsi que
éventuellement (F) des additifs,
préparées par un procédé dans lequel, dans une première étape, on mélange les uns aux autres et on fait réagir un siloxane (A) de Formule générale (I) 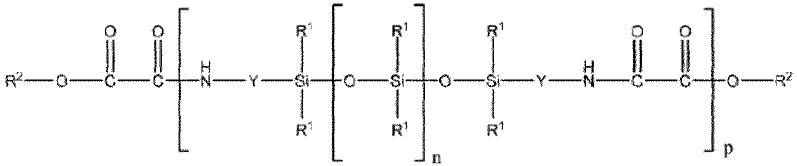 dans laquelle
R¹ peut être identique ou différent et représente un radical hydrocarboné monovalent, lié à SiC, éventuellement substitué, qui peut être interrompu par des hétéroatomes,
R² peut être identique ou différent et représente un atome d'hydrogène ou un radical hydrocarboné monovalent, éventuellement substitué, qui peut être interrompu par des hétéroatomes,
Y peut être identique ou différent et représente des radicaux hydrocarbonés divalents, éventuellement substitués, ayant 1 à 40 atomes de carbone, dans lequel des atomes de carbone individuels peuvent être remplacés par des atomes d'oxygène ou par -NR-,
R représente un atome d'hydrogène ou un radical hydrocarboné monovalent, éventuellement substitué,
n est égal à 0 ou à un nombre de 1 à 1 000 et
p est égal à 0 ou à un nombre de 1 à 10,
au moins un composé (B) de Formule générale
R⁴NH-R³-NR⁴H (II),
dans laquelle
R³ représente un radical hydrocarboné divalent, éventuellement substitué, ayant 1 à 40 atomes de carbone, dans lequel des atomes de carbone individuels peuvent être remplacés par des atomes d'oxygène ou par -NR'-,
R' représente un atome d'hydrogène ou un radical hydrocarboné monovalent, éventuellement substitué, et
R⁴ peut être identique ou différent et représente un atome d'hydrogène ou un radical hydrocarboné monovalent, éventuellement substitué, qui peut être interrompu par des hétéroatomes,
(D) au moins un colorant,
éventuellement un composé (C) de Formule générale
R⁵NH-Y¹-SiR⁶₂-[O-SiR⁶₂]ₘ-O-SiR⁶₂-Y¹-NHR⁵ (III),
dans laquelle
R⁶ peut être identique ou différent et représente un radical hydrocarboné monovalent, lié à SiC, éventuellement substitué, qui peut être interrompu par des hétéroatomes,
R⁵ peut être identique ou différent et représente un atome d'hydrogène ou un radical hydrocarboné monovalent, éventuellement substitué, qui peut être interrompu par des hétéroatomes,
Y¹ peut être identique ou différent et représente des radicaux hydrocarbonés divalents, éventuellement substitués, ayant 1 à 40 atomes de carbone, dans lesquels des atomes de carbone individuels peuvent être remplacés par des atomes d'oxygène ou par -NR"-,
R" représente un atome d'hydrogène ou un radical hydrocarboné monovalent, éventuellement substitué, et
m est égal à 0 ou à un nombre entier de 1 à 1 000,
et
éventuellement des additifs (F),
et éventuellement, dans une seconde étape, on fait fondre la composition obtenue dans la première étape, puis on la granule, ce pour quoi on utilise le colorant (D) en des quantités de 2 à 400 parties en poids pour 100 parties en poids des composants (A).

2. Compositions selon la revendication 1, **caractérisées en ce qu'**il s'agit de compositions de ce type contenant
(E) des copolymères contenant des motifs de Formule (IV),
(D) des pigments, ainsi que
éventuellement (F) des additifs.

3. Compositions selon la revendication 1 ou 2, **caractérisées en ce que** les copolymères (E) ont une masse moléculaire (moyenne en nombre) de 20 000 g/mol à 1 000 000 g/mol, mesurée à 45 °C dans du THF par une chromatographie par exclusion de taille (SEC).

4. Procédé de fabrication de compositions contenant des colorants, dans lequel
dans une première étape, on mélange les uns aux autres et on fait réagir au moins un siloxane (A) de Formule générale (I) 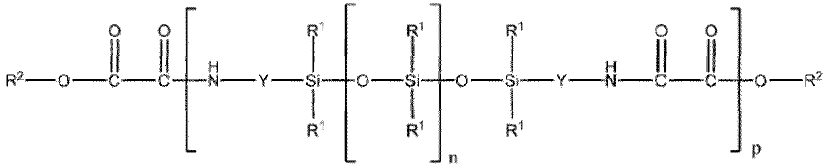 dans laquelle
R¹ peut être identique ou différent et représente un radical hydrocarboné monovalent, lié à SiC, éventuellement substitué, qui peut être interrompu par des hétéroatomes,
R² peut être identique ou différent et représente un atome d'hydrogène ou un radical hydrocarboné monovalent, éventuellement substitué, qui peut être interrompu par des hétéroatomes,
Y peut être identique ou différent et représente des radicaux hydrocarbonés divalents, éventuellement substitués, ayant 1 à 40 atomes de carbone, dans lesquels des atomes de carbone individuels peuvent être remplacés par des atomes d'oxygène ou par -NR-,
R représente un atome d'hydrogène ou un radical hydrocarboné monovalent, éventuellement substitué,
n est égal à 0 ou à un nombre de 1 à 1 000 et
p est égal à 0 ou à un nombre de 1 à 10,
au moins un composé (B) de Formule générale
R⁴NH-R³-NR⁴H (II),
dans laquelle
R³ représente un radical hydrocarboné divalent, éventuellement substitué, ayant 1 à 40 atomes de carbone, dans lequel des atomes de carbone individuels peuvent être remplacés par des atomes d'oxygène ou par -NR'-,
R' représente un atome d'hydrogène ou un radical hydrocarboné monovalent, éventuellement substitué, et
R⁴ peut être identique ou différent et représente un atome d'hydrogène ou un radical hydrocarboné monovalent, éventuellement substitué, qui peut être interrompu par des hétéroatomes,
(D) au moins un colorant,
éventuellement un composé (C) de Formule générale
R⁵NH-Y¹-SiR⁶₂-[O-SiR⁶₂]ₘ-O-SiR⁶₂-Y¹-NHR⁵ (III),
dans laquelle
R⁶ peut être identique ou différent et représente un radical hydrocarboné monovalent, lié à SiC, éventuellement substitué, qui peut être interrompu par des hétéroatomes,
R⁵ peut être identique ou différent et représente un atome d'hydrogène ou un radical hydrocarboné monovalent, éventuellement substitué, qui peut être interrompu par des hétéroatomes,
Y¹ peut être identique ou différent et représente des radicaux hydrocarbonés divalents, éventuellement substitués, ayant 1 à 40 atomes de carbone, dans lesquels des atomes de carbone individuels peuvent être remplacés par des atomes d'oxygène ou par -NR"-,
R" représente un atome d'hydrogène ou un radical hydrocarboné monovalent, éventuellement substitué, et
m est égal à 0 ou à un nombre de 1 à 1 000,
et
éventuellement des additifs (F),
ainsi qu'éventuellement, dans une deuxième étape, on fait fondre la composition obtenue dans la première étape, puis on la granule, ce pour quoi on utilise les colorants (D) en des quantités de 2 à 400 parties en poids pour 100 parties en poids des composants (A).

5. Procédé selon la revendication 4, **caractérisé en ce que** les colorants (D) sont des pigments.

6. Procédé selon l'une ou plusieurs des revendications 4 à 5, **caractérisé en ce que**, dans la première étape, l'incorporation par mélange des colorants (D) s'effectue dans un ou plusieurs des composants (A), (B) ou (C).

7. Procédé selon l'une ou plusieurs des revendications 4 à 6, **caractérisé en ce que** la fusion dans la deuxième étape est mise en œuvre à des températures de 50 à 250 °C sous des pressions de 100 à 30 000 hPa.

8. Procédé de fabrication d'objet moulé coloré par mélange d'un matériau polymère avec la composition contenant des colorants selon l'une ou plusieurs des revendications 1 à 3, ou fabriquée selon l'une ou plusieurs des revendications 4 à 7, fusion et homogénéisation du mélange ainsi obtenu, puis refroidissement du mélange avec façonnage.

9. Procédé selon la revendication 8, **caractérisé en ce que**, pour ce qui concerne les matériaux polymères utilisés, il s'agit de polyéthylène, de polypropylène, de polyamide, de poly(téréphtalate d'éthylène), de poly(téréphtalate de butylène), d'élastomères thermoplastiques à base de caoutchouc réticulé, d'éthylène-acétate de vinyle, de polyhydroxybutyrate et/ou de copolymères ou mélanges de ceux-ci, ainsi que de polystyrène, de polystyrène modifiant choc, de copolymères styrène-acrylonitrile, de copolymères acrylonitrile-butadiène-styrène, de poly(chlorure de vinyle), de poly(fluorure de vinylidène), d'éthylènetétrafluoréthylène (ETFE), de poly(méthacrylate de méthyle), de polycarbonate, de polyaryléthercétone, de polyacrylonitrile, de polyétherimide, de poly(naphtalate d'éthylène), de polyéthersulfone, de polyimide, de polycétone, de polyoxyméthylène, de poly(sulfure de phénylène), de polyphénylènesulfone, de polysulfone, de caoutchouc styrène-butadiène, de caoutchouc acrylonitrile-butadiène, de caoutchouc naturel ou de copolymères ou mélanges de ceux-ci.
